# EUROPEAN PATENT SPECIFICATION

(11) **EP 3 118 033 B1**
(45) Date of publication and mention of the grant of the patent: **11.03.2020**
(21) Application number: 16168618.3
(22) Date of filing: 06.05.2016
(51) Int. Cl.: B60G 11/14, B60G 17/017, B60G 21/05, B60G 21/055

(54) **WHEEL SUSPENSION SYSTEM WITH ADJUSTABLE ROLL STIFFNESS, TYPICALLY FOR OFF-ROAD VEHICLES**
RADAUFHÄNGUNGSSYSTEM MIT EINSTELLBARER WANKSTEIFIGKEIT, INSBESONDERE FÜR GELÄNDEFAHRZEUGE
SYSTÈME DE SUSPENSION DE ROUE AVEC RIGIDITÉ DE CYLINDRE RÉGLABLE, TYPIQUEMENT POUR VÉHICULES TOUT-TERRAIN

(30) Priority: 16.07.2015 PL 41315415
(43) Date of publication of application: 18.01.2017
(73) Proprietor: Siec Badawcza Lukasiewicz - Przemyslowy Instytut Motoryzacji, 03-301 Warszawa (PL)
(72) Inventor: Lisiecki, Jakub, 05-092 Lomianki (PL); Lisiecki, Szymon, 05-092 Lomianki (PL); Muszynski, Andrzej, 05-850 Szeligi (PL); Wojdas, Dariusz, 48-200 Prudnik (PL)
(74) Representative: AOMB Polska Sp. z.o.o.

(56) References cited:
- EP-A1- 0 152 914
- EP-A1- 2 719 557
- EP-A2- 0 234 808
- DE-C- 915 418
- US-A- 3 089 710
- US-A- 5 186 486
- US-A- 5 765 846
- US-A1- 2006 255 550
- US-B2- 7 798 508

## Description

### TECHNICAL FIELD

This invention is related to a wheel suspension system with adjustable roll stiffness, intended in particular for off-road vehicles capable of being driven both on paved roads and in extremely difficult terrain conditions.

### BACKGROUND ART

In vehicles capable of being driven both on paved roads and in very difficult terrain conditions, the wheel suspension systems must meet many different requirements, which often are mutually exclusive. The on-road vehicles are required to ensure adequate riding comfort, measured by the accelerations of vibrations transmitted to vehicle occupants. Another important issue, related to safety, is the requirement to ensure good contact between the wheels and the ground surface so that the tangential forces developing between the wheels and the ground surface can be transmitted. The safety in this case is measured by variations in the vertical wheel loads caused by vehicle motion on uneven road, i.e. the variations should be as small as possible.

The off-road vehicles have to meet additional requirements arising from their motion on a road with very big surface irregularities with high grades and cross slopes. The negotiation of big surface irregularities requires the use of high-stroke suspension systems, especially in the situations that enforce the front and rear axles to take positions with a big skew angle, i.e. cause alternate deflection of the front left and rear right wheel, with the front right and rear left wheel being simultaneously unloaded. For the suspension system to offer a high stroke value, its vertical stiffness must be relatively low. A consequence of the low vertical stiffness of the suspension system may be its insufficient roll stiffness, especially if the spring elements must be placed at a short distance from each other due to vehicle layout considerations. The insufficient roll stiffness manifests itself in excessive sideways tilting (roll) of the vehicle when cornering. In the case of off-road vehicles, the excessive sideways tilting may occur when the vehicle is traversing a hillside with a high cross slope, which may result in a rollover.

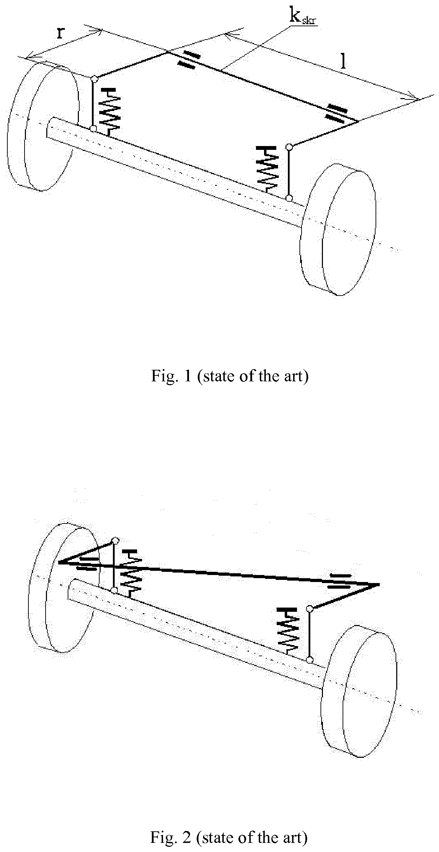

A known method of correcting the insufficient roll stiffness of the suspension system is the application of an anti-roll bar (stabilizer), i.e. a torsion bar with two arms at its ends, pivoted to the vehicle chassis and positioned perpendicularly to the vehicle symmetry plane (Fig. 1). The ends of the anti-roll bar arms are linked to the wheel mounting members. When the vertical movements of the wheels are consistent with each other, the anti-roll bar does not affect the operation of the suspension system, freely pivoting in its supports. Conversely, if the wheels move vertically in opposite directions then the central part of the anti-roll bar is twisted and forces counteracting the vertical wheel movements appear at the ends of the anti-roll bar arms. Thus, the anti-roll bar raises the roll stiffness of the suspension system without increasing its vertical stiffness.

The functioning of the anti-roll bar not always produces a beneficial effect. For example, the anti-roll bar detrimentally affects the ride comfort during rectilinear vehicle motion on a road with uneven surface. Solutions are known that make it possible to disconnect the anti-roll bar ends from each other or to change the anti-roll bar stiffness (e.g. patents: Active stabilizer bar system for a vehicle chassis - US 7798508 B2; Active link for a stabilizer bar - US 5186486 A; Active anti-roll bar - EP 2719557 A1; EP 0234808 A2; EP 0152914 A1).

To counteract excessive pitching of a motor vehicle, the front and rear suspension system may be coupled together. This was implemented with the use of spring elements (e.g. in Citroen 2CV) or a special hydraulic system (e.g. the Hydrolastic suspension system in BMC Morris 1100).

Active or semi-active suspension systems, making it possible to adopt the suspension system characteristics to vehicle motion conditions and to optimize the functioning of the suspension systems depending on the requirements to be met, become increasingly popular in present-day motor vehicles. Such a concept may be implemented in pneumatic or hydro-pneumatic suspension systems. However, the solutions of this kind are characterized by a significant degree of complexity of the system design and require the use of an advanced control system; therefore, they are susceptible to defects and do not perform well in difficult operation conditions, especially in vehicles intended for military applications.

DE915418C discloses an articulated driving axle having additional springs disposed between a half-shaft housing and a main transmission housing. The main transmission housing is attached to a vehicle frame. Said additional springs limit tilting of the half-shaft with respect to its initial position. As a result, the vehicle's wheels lean angles are also limited.

US patent application US2006255550 discloses a lean control system for adjusting the vehicle lean angle. An auxiliary lean control system is coupled to transverse beam and includes an energy storage device for storing energy to actuate the lean control system, a stabilizing mechanism coupled to the energy storage device and to the leanable portion of the vehicle for applying energy received from the energy storage device to the leanable portion of the vehicle, and a linkage coupled to the energy storage device and to the stabilizing mechanism for transferring energy from the energy storage device to the stabilizing mechanism. The above solution does not affect roll stiffness.

Yet another US patent application US5765846 shows a three-wheeled curve-leaning vehicle. A suspension system of the vehicle has a lever which is mechanically coupled with the vehicle body such that the vehicle body leans inwardly when the vehicle is negotiating a curve. The lever has two mounting points. The pivot lever 13 is mounted pivotally relative to the axle frame and can be tilted sidewardly by means of an actuator. On the other hand, the pivot point of the lever is disposed below the longitudinal pivot axis of the vehicle body. A pin projects eccentrically, that is, below the longitudinal axis from the body and is received in an elongated opening in the lever so that it is firmly engaged by the lever. As a result, pivoting of the lever in one direction causes tilting of the vehicle body in the opposite sense, that is, pivoting of the lever toward the outside curve wheel causes inward leaning of the vehicle body. In off-road vehicles, a problem of excessive roll stiffness of the suspension system may occur, which may limit the possibility of achieving an adequate skew angle between vehicle axles during drives on large bumps with asymmetric shape. This may cause vehicle wheels to be lifted off the ground and a reduction in the driving force that can be transmitted to the ground. In such a situation, high vertical stiffness and low roll stiffness of the suspension systems would be favourable. The simplest solution in this case would be the use of an "*anti-stabilizer*" (Fig. 2) in the form of a torsion bar similar to the anti-roll bar, but with its arms pointing in opposite directions and the torsion bar being non-parallel to the vehicle axles. In such a case, the stiffness of the vertical spring elements should be selected to meet the requirements of the desirable (low) roll stiffness and the vertical stiffness would be raised to the required value by the *anti-stabilizer*, without an increase in the roll stiffness. However, no practical applications of such a solution are known.

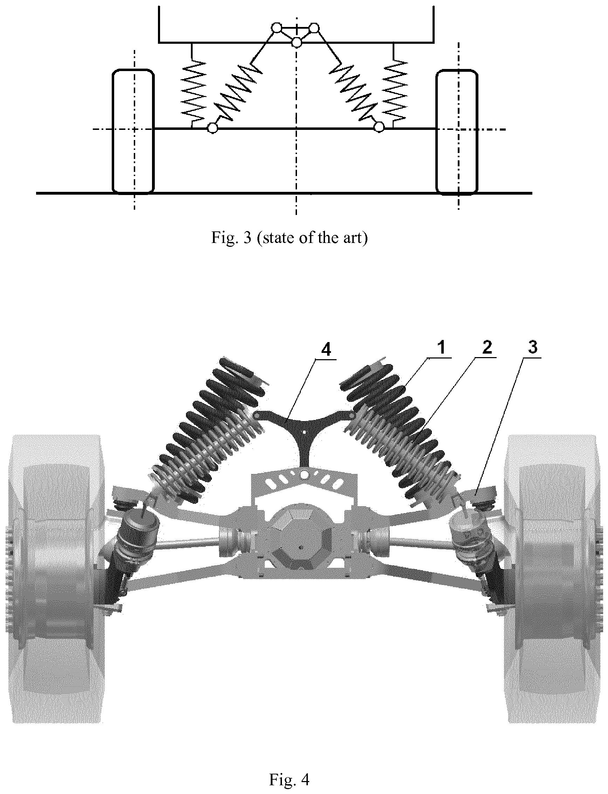

A similar function may be fulfilled by a system of two additional springs fastened to the vehicle chassis by means of a rocking double-arm lever (Fig. 3). Such a system of springs raises the vertical stiffness of the suspension system without increasing its roll stiffness.

Insufficient roll stiffness of the suspension system, in turn, is unfavourable when the vehicle is cornering with high speeds, because it results in excessive sideways tilts of the vehicle body. In the case of an off-road vehicle, the low roll stiffness of the suspension system is also disadvantageous when the vehicle is traversing a hillside with a high cross slope, because an excessive tilt may result in a rollover risk.

The above mutually exclusive requirements for the roll stiffness of the suspension system of an off-road vehicle may be effectively met by applying a suspension system with adjustable roll stiffness.

### BRIEF SUMMARY OF THE INVENTION

A suspension system according to the present invention, with adjustable roll stiffness, is provided with an additional system of springs raising the vertical stiffness of the suspension system without increasing its roll stiffness, , wherein each of the springs that constitute the system is fastened at one of its ends to the wheel supporting member or its guiding element (suspension arm or drive axle) and at the other end to one of the two arms of a double-arm lever, which in turn is pivotally fixed to the vehicle chassis by its third arm (bodywork or frame). The lever is provided with an additional arm, which makes it possible to lock the lever in its central position with the use of a locking device operated by an actuator (e.g. a spring return pneumatic cylinder).

Apart from that, the lever may be set in other positions by means of an additional actuator connected with the additional lever arm, thanks to which the strain of the additional springs may be changed and this, in turn, makes it possible, e.g. when traversing a hillside, to reduce the angle of lateral tilt of the vehicle body in comparison with that occurring in the situation where the lever is locked in its central position.

Such a solution may be applied to both dependent (rigid axle) and independent suspension system.

### ADVANTAGES OF THE INVENTION

By embodying the present invention, a suspension system has been obtained whose roll stiffness is low in comparison with its vertical stiffness, enabling large antisymmetric vertical travels of individual vehicle wheels and, in consequence, big skew angles between vehicle axles, which is an advantageous effect when the vehicle is driven on large bumps in off-road areas. Simultaneously, such a solution makes it possible to increase the roll stiffness and to counteract excessive roll of the vehicle body when the vehicle is cornering or traversing a hillside with a high cross slope.

For the invention to be better understood, it will now be presented in an advantageous embodiment example, illustrated with the drawings attached, where:
- Fig. 1: (state of the art) shows a schematic diagram of the suspension system with an anti-roll bar; kₛₖᵣ represents the anti-roll bar;
- Fig. 2: (state of the art) shows a schematic diagram of the suspension system with an anti-stabilizer;
- Fig. 3: (state of the art) shows a schematic diagram of the suspension system with two additional springs fastened to a double-arm lever pivotally fixed to the vehicle chassis;
- Fig. 4: shows an example embodiment of the suspension system with adjustable roll stiffness according to the present invention;
- Fig. 5: shows an example embodiment of the suspension system with adjustable roll stiffness according to the present invention, in the configuration with the lever locked in its central position;
- Fig. 6: shows an example embodiment of the suspension system with adjustable roll stiffness according to the present invention, in the configuration with the lever unlocked;
- Fig. 7: shows the vehicle body tilted when the vehicle is traversing a hillside with the lever locked in its central position;
- Fig. 8: shows a reduction in the angle of lateral tilt of the vehicle body, obtained thanks to the lever being set by an actuator in its outermost right position, when the vehicle is traversing a hillside.

### EXAMPLE EMBODIMENT

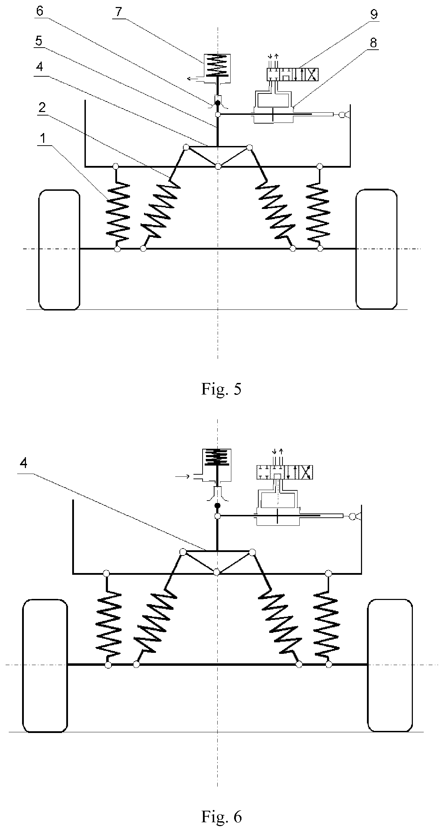

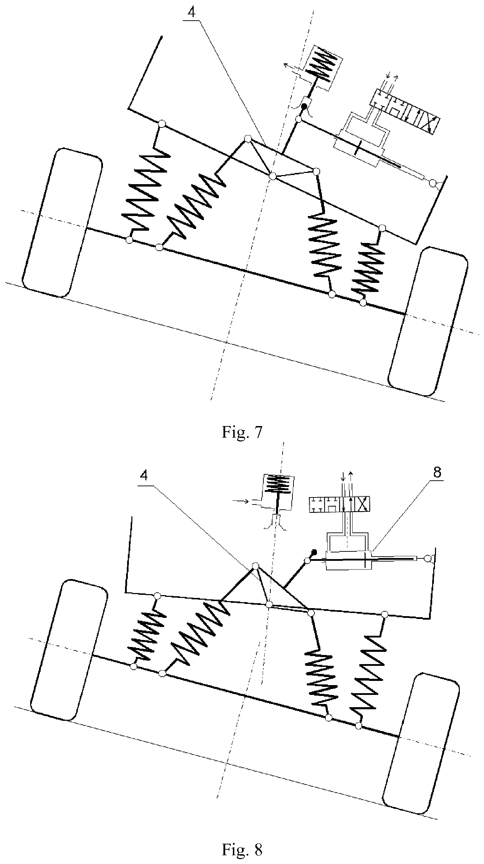

The invention is explained for an example embodiment shown in a drawing (Fig. 4), which depicts an independent suspension system of an off-road vehicle, and in schematic diagrams in Figs. 5-8.

As shown in Fig. 4, the suspension system, which includes a system of main springs 1, is provided with a system of additional springs 2. Each of the additional springs is fastened at one of its ends to suspension arm 3 and at the other end to a double-arm lever 4 pivotally fixed to the vehicle chassis (bodywork or frame). The lever is provided with additional arm 5, whose end can be engaged with locking device 6 operated by actuator 7 for the lever to be locked in its central position (Fig. 5). The locking of the lever causes a growth in the roll stiffness of the suspension system.

When the locking device is released (Fig. 6), the freedom of rotation of lever 4 results in the fact that although additional springs 2 still raise the vertical stiffness of the suspension system, they will no longer increase its roll stiffness, which will now exclusively depend on the stiffness and spacing of the main suspension springs. Such a setting of the suspension system makes it possible to obtain a big skew angle between individual vehicle axles, thanks to which adequate contact between the vehicle wheels and the ground surface is maintained.

The lateral tilt angle of the vehicle body when traversing a hillside may be reduced by means of an additional actuator 8 (e.g. of a hydraulic type), which can fix lever 4 in a non-central position, especially in the outermost left or right position, providing that locking device 6 has been released. The lever being set in such a position causes the strain of the downhill additional spring to be increased and the strain of the uphill additional spring to be decreased. Such a change in the strain of the additional springs generates a moment of forces in the suspension system, counteracting the moment of forces tilting the vehicle body. The actuator is controlled by means of valve 9.

## Claims

1. A wheel suspension system with adjustable roll stiffness comprising:
a system of main springs (1);
a system of additional springs (2), wherein each spring of the system is fastened at one end to a wheel supporting member or its guiding element, in particular to a suspension arm (3) or to a drive axle,
the other end of each of the additional springs (2) is connected with one of two arms of a double-arm lever (4), wherein the lever (4) is further pivotally fixed to a vehicle chassis, in particular to a bodywork or to a frame of said vehicle, **characterized in that** the double-arm lever (4) is connected with an additional arm (5) on which a locking device (6) acts, said locking device (6) being capable of fixing the lever (4) in the central position or releasing it so that the lever (4) can freely rotate around the axis of its mounting to the vehicle chassis.

2. A wheel suspension system according to claim 1, **wherein** the lever (4) is connected through the additional arm (5) with an actuator (8), by means of which the lever (4) can be set and fixed in a non-central position, e.g. in the outermost left or right position.

## Patentansprüche

1. Das Radaufhängungssystem mit einstellbarer Rollsteifigkeit, umfassend: ein System von Hauptfedern (1);
ein System von Zusatzfedern (2), wobei jede Feder des Systems an einem Ende an einem Radhalteelement oder dessen Führungselement, insbesondere an einem Aufhängearm (3) oder an einer Antriebsachse, befestigt ist,
das andere Ende jeder der Zusatzfedern (2) mit einem der beiden Armen eines Doppelarmhebels (4) verbunden ist,
wobei der Hebel (4) ferner an einem Fahrzeugchassis, insbesondere an einer Karosserie oder an einem Rahmen des genannten Fahrzeugs schwenkbar befestigt ist, **dadurch gekennzeichnet, dass** der Doppelarmhebel (4) mit einem zusätzlichen Arm (5) verbunden ist, auf den eine Verriegelungsvorrichtung (6) wirkt, wobei die Verriegelungsvorrichtung (6) in der Lage ist, den Hebel (4) in der Mittelstellung zu fixieren oder freizugeben, so dass der Hebel (4) sich frei um die Achse seiner Befestigung am Fahrzeugchassis drehen kann.

2. Das Radaufhängungssystem nach Anspruch 1, **wobei** der Hebel (4) durch den zusätzlichen Arm (5) mit einem Stellglied (8) verbunden ist, mittels dem der Hebel (4) in einer dezentralen Position, z.B. in der äußersten linken oder rechten Position, verstellbar und fixierbar ist.

## Revendications

1. Un système de suspension de roue à raideur de roulis réglable comprenant: un système de ressorts principaux (1) ;
un système de ressorts supplémentaires (2), dans lequel chaque ressort du système est fixé à une extrémité à un élément porteur de roue ou à son élément de guidage, en particulier à un bras de suspension (3) ou à un essieu d'entraînement,
l'autre extrémité de chacun des ressorts supplémentaires (2) est reliée à l'un des deux bras d'un levier à double bras (4),
dans lequel le levier (4) est en outre fixé de manière pivotante à un châssis de véhicule, en particulier à une carrosserie ou à un cadre dudit véhicule, **caractérisé en ce que** le levier à double bras (4) est relié à un bras supplémentaire (5) sur lequel agit un dispositif de verrouillage (6), ledit dispositif de verrouillage (6) étant capable de fixer le levier (4) dans la position centrale ou le libérer de sorte que le levier (4) puisse tourner librement autour de l'axe de son montage sur le châssis du véhicule.

2. Un système de suspension de roue selon la revendication 1, dans lequel le levier (4) est relié par l'intermédiaire du bras supplémentaire (5) à un actionneur (8) au moyen duquel le levier (4) peut être réglé et fixé dans une position non centrale, par ex. dans la position extrême à gauche ou à droite.
